# EUROPEAN PATENT SPECIFICATION

(11) **EP 0 578 105 B1**
(45) Date of publication and mention of the grant of the patent: **13.08.1997**
(21) Application number: 93110348.5
(22) Date of filing: 29.06.1993
(51) Int. Cl.: B29C 35/02

(54) **Road vehicle tire curing reactor**
Strassenfahrzeugreifen-Vulkanisiereinrichtung
Appareil à vulcaniser un pneumatique de véhicule routier

(30) Priority: 01.07.1992 IT TO920552
(43) Date of publication of application: 12.01.1994
(73) Proprietor: BRIDGESTONE CORPORATION, Tokyo 104 (JP)
(72) Inventor: Siegenthaler, Karl J., I-00100 Roma (Ostia) (IT)
(74) Representative: Jorio, Paolo, Dr. Ing.

(56) References cited:
- AT-B- 321 762
- US-A- 3 817 670
- US-A- 3 868 203

## Description

The present invention relates to a road vehicle tire curing reactor.

EP-A-0 540 049, which has to be considered under the terms of Article 54(3) EPC, relates to a road vehicle tire manufacturing process whereby a green tire is assembled inside an annular forming mold consisting of an outer annular body, two inner annular supports fitted to respective bead portions of the tire, and two annular lateral plates connecting the two inner annular supports and the outer annular body.

According to the above patent, the tire so formed is kept inside the forming mold pending completion of the curing process.

It is an object of the present invention to provide a curing reactor designed to enable implementation of the above process in as straightforward a manner as possible, i.e. enabling curing of the tire inside the forming mold.

It is a further object of the present invention to provide a curing reactor enabling the tire to be maintained inside the forming mold with no need for presses or compression systems in general external to the curing device.

Yet a further object of the present invention is to provide a curing reactor enabling size changes to be effected extremely rapidly.

According to the present invention, there is provided a road vehicle tire curing reactor comprising a mold defining internally a toroidal curing chamber for a green tire; a number of heat exchange means adjacent to the mold; a gas curing unit in turn comprising a first and second portion on either side of the mold; and means for moving said two portions towards each other and so gripping the mold; characterized by the fact that it also comprises an inner forming module having an annular bladder expandable inside said toroidal chamber, and inlets and outlets for pressurized circulation of heat exchange gas inside the bladder; one of said two portions of the curing unit presenting a central core extending through the mold and the inner module and connected in sliding manner to the inner module; and a releasable joint being provided for axially connecting the core to the other portion of the curing unit.

For controlling and maintaining within given limits the temperatures of different portions of the tire being cured, according to a preferred embodiment of the reactor as described above, at least part of said heat exchange means comprises selectively operated local cooling and, preferably, local heating means.

A number of non-limiting embodiments of the present invention will be described by way of example with reference to the accompanying drawings, in which:
Fig.1 shows a view in perspective of a preferred embodiment of a curing reactor in accordance with the present invention;
Fig.2 shows a view in perspective, with parts removed for simplicity, of the Fig.1 reactor in a different operating position;
Fig.3 shows an enlarged axial section in perspective of a detail in Fig.1;
Fig.4 shows an axial section of the Fig.3 detail;
Fig.5 shows an enlarged view of a first detail in Fig.4;
Fig.6 shows an enlarged view of a second detail in Fig.4;
Fig.7 shows a section along line VII-VII in Fig.6;
Fig.8 shows a section along line VIII-VIII in Fig.6;
Fig.9 shows an axial section, as in Fig.4, of a variation of the Fig.3 and 4 detail.

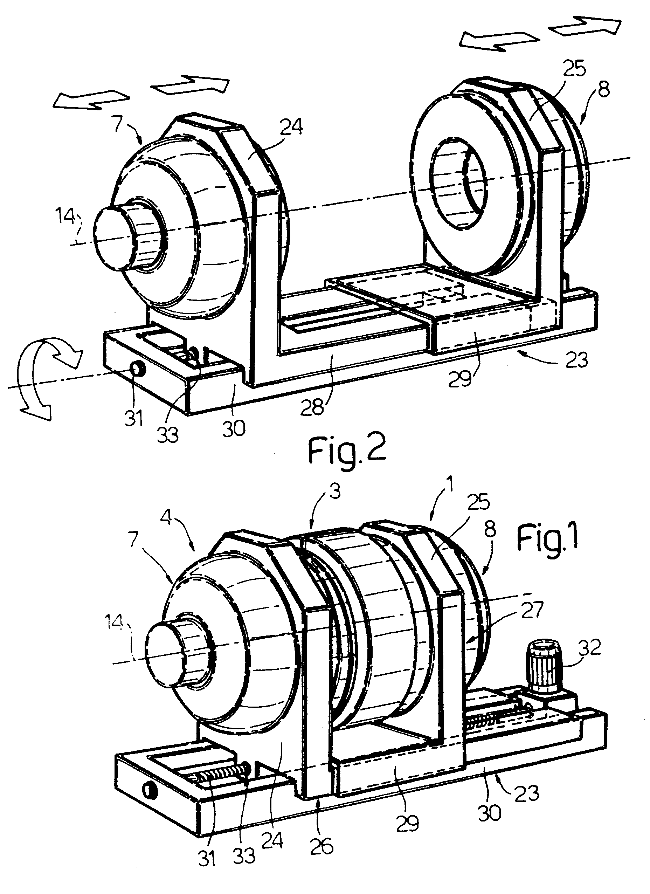

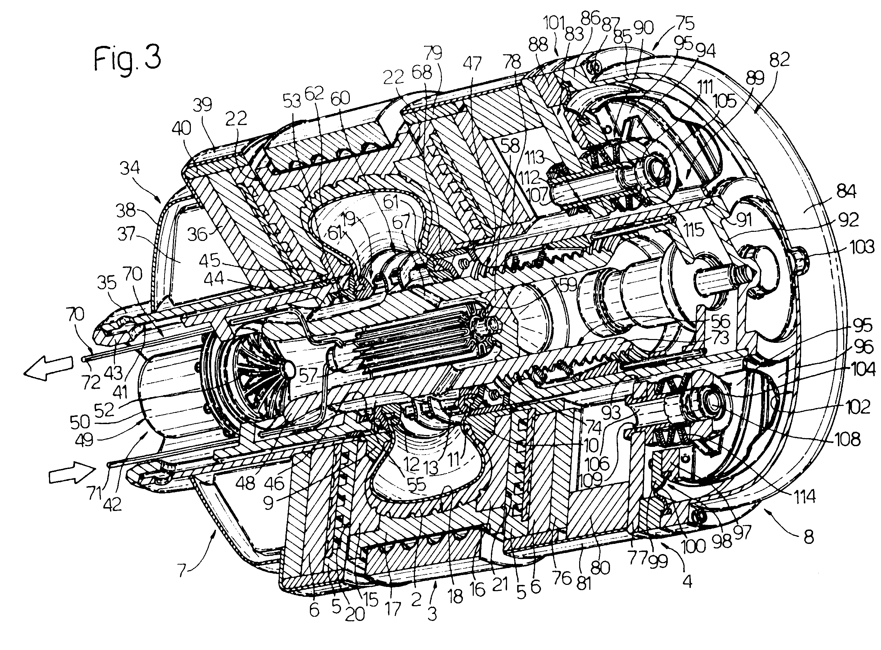

Number 1 in Fig.1 indicates a curing reactor for road vehicle tires 2 (Fig.3).

Reactor 1 comprises a toroidal curing mold 3; a gas curing unit 4 connected to mold 3; a pair of annular heat exchange plates 5 facing respective opposite axial ends of mold 3; and a pair of annular insulating plates 6 connected to and externally insulating respective plates 5.

Curing unit 4 comprises a first and second portion 7 and 8 on either side of mold 3, which consists of a forming mold for a green tire 2 as described in Italian Patent Application n. TO91A 000820.

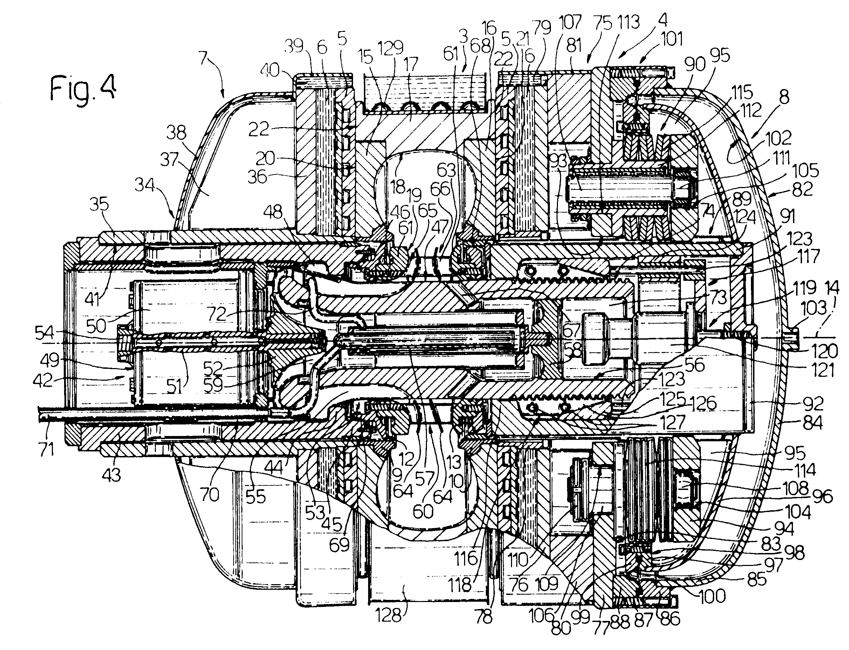

As shown in Fig.4, mold 3 comprises a first and second inner annular support 9 and 10 for supporting respective bead portions 11 of tire 2. Annular supports 9 and 10 are defined internally by respective cylindrical surfaces 12 and 13 coaxial with axis 14, and are connected releasably to the inner edge of respective annular plates 15 and 16, the outer edge of each of which is connected releasably to a respective axial end of an outer annular body 17. Together with annular plates 15 and 16 and annular supports 9 and 10, annular body 17 defines a toroidal chamber 18, which is accessible along the inner edge through an annular opening 19 defined between annular supports 9 and 10 and extending about axis 14, and presents an inner surface negatively reproducing the outer surface of finished tire 2.

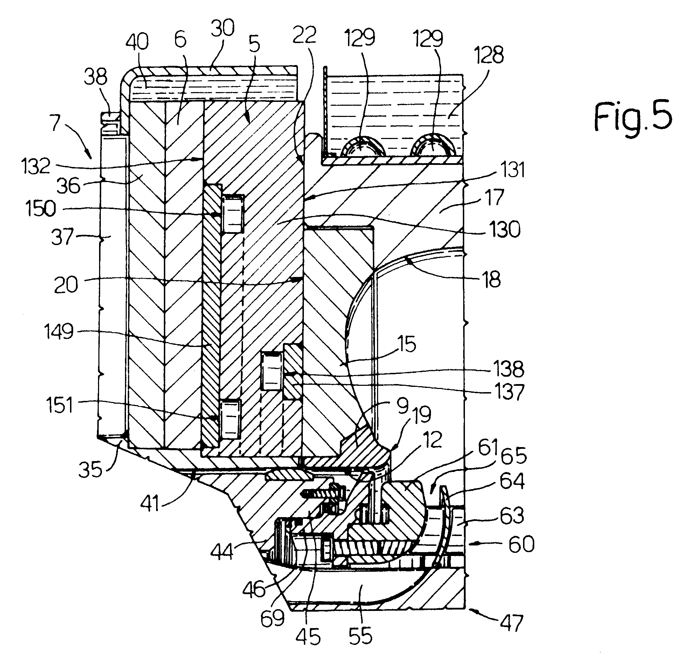

Annular plates 15 and 16 present respective outer lateral surfaces 20 and 21 projecting slightly outwards (see surface 20 in Fig.5) in relation to respective end surfaces 22 of annular body 17.

As shown in Fig.s 1 and 2, reactor 1 comprises a device 23 for activating portions 7 and 8 of unit 4. Device 23 comprises two vertical plates 24 and 25 perpendicular to axis 14 and having respective holes coaxial with axis 14 and engaged respectively by portions 7 and 8. Plates 24 and 25 form part of respective substantially L-shaped slides 26 and 27 comprising respective horizontal arms 28 and 29, arm 29 extending from the bottom of plate 25 towards plate 24 and fitted to arm 28 so as to slide parallel to axis 14, and arm 28 extending from the bottom of plate 24 towards plate 25 and fitted to a guide base 30 so as to also slide parallel to axis 14. Base 30 presents a screw 31 powered by a motor 32 and connected to slides 26 and 27 via respective screw-nut-screw couplings 33 (only one of which is shown in Fig.s 1 and 2) for moving slides 26 and 27 between a closed operating position (Fig.1) wherein portions 7 and 8 of unit 4 grip mold 3, and an open position (Fig.2) wherein portions 7 and 8 are separated for enabling assembly (or removal) of mold 3.

In the closed position shown in Fig.1, portion 7 of curing unit 4 is positioned coaxial with axis 14 and facing annular plate 15 of mold 3, and, as shown in Fig.s 3 and 4, comprises a load-bearing frame 34 defined by a pipe 35 coaxial with axis 14 and the intermediate portion of which is fitted with an annular plate 36. The surface of annular plate 36 facing mold 3 is fitted with an insulating plate 6 and heat exchange plate 5 arranged one on top of the other, coaxial with axis 14, and engaged by the end portion of pipe 35 facing mold 3.

Frame 34 also comprises a number of ribs 37 integral with plate 36 and extending radially outwards from the outer surface of pipe 35; and a bell 38 fitted on to pipe 35, enclosing ribs 37, and having a cylindrical end portion 39, which engages the hole formed through vertical plate 24 of slide 26 and, via the interposition of an insulating sleeve 40, encloses the outer edge of plate 36 and plates 6 and 5 connected to plate 36.

Pipe 35 is defined internally by a cylindrical surface 41 of substantially the same diameter as cylindrical surface 12 of annular support 9, and houses a portion of a turbine device 42 of the type described in EP-A-0 467 314.

Device 42 comprises a tubular body 43 fitted in fixed and fluidtight manner inside pipe 35 and having, close to the end facing mold 3 and fitted inside plates 5 and 6, an inner annular flange 44 from which extends, towards mold 3, a cylindrical appendix 45 projecting outwards of pipe 35 and defining with flange 44 an annular seat 46.

Device 42 also comprises a cylindrical core 47 extending coaxially with axis 14 through mold 3 and part of portions 7 and 8, and having, close to a first end fitted inside pipe 35, an outer flange 48 locked axially against flange 44. Finally, device 42 comprises a motor 49, the casing 50 of which is locked axially inside pipe 35 for axially locking flange 48 against flange 44, and a tubular shaft 51 of which, coaxial with axis 14, projects from casing 50 towards core 47, and is fitted with a fan 52 for circulating heat exchange gas in a pneumatic circuit 53 formed on core 47 and communicating externally via a supply-exhaust fitting 54 formed on one end of shaft 51.

More specifically (Fig.s 3 and 4), the portion of core 47 extending through plates 5 and 6 of portion 7 and surface 12 of annular support 9 presents a number of axial grooves defining an annular supply conduit 55 of circuit 53. Core 47 also presents an axial through hole 56, a first end of which houses fan 52, and an intermediate portion of which, extending through mold 3, houses a heating element 57 fixed axially inside hole 56 by a plate 58 integral with core 47, and having outer fins contacting the inner surface of hole 56 and defining, with hole 56, a return conduit 59.

The central portion of core 47 extending through mold 3 is fitted in sliding manner with a substantially tubular bladder module 60 comprising two annular clamping elements 61 located respectively inwards of surfaces 12 and 13 and engaging the opposite annular ends of a bladder 62 (Fig.5) extendable inside toroidal chamber 18 through opening 19. Module 60 also comprises a number of axial rods 63 connecting the two annular elements 61 and defining a number of openings facing opening 19 and each divided into three parts by two walls 64, which define, through module 60, an opening 65 connecting supply conduit 55 to toroidal chamber 18, and an opening 66 connecting toroidal chamber 18 to a number of conduits 67 formed through core 47 and communicating with return conduit 59.

Module 60 is centered at one end in relation to mold 3 by means of an auxiliary ring 68 fitted between surface 13 and one of annular clamping elements 61, and presents, at the other end (Fig.5), an annular appendix 69 engaging annular seat 46 in sliding and fluidtight manner.

As shown in Fig.s 3 and 4, heating element 57 defines part of a heat exchange fluid circuit 70, and is connected to an external fluid heating unit (not shown) by supply and return conduits 71 and 72 extending along tubular body 43.

Core 47 presents a tubular head 73 extending inside portion 8 beyond plate 58, and the outer surface of which presents a series of equally-spaced transverse annular grooves 74.

As shown more clearly in Fig.s 3 and 4, portion 8 of curing unit 4 comprises a rigid frame 75 in turn comprising a pair of annular plates 76 and 77 coaxial with axis 14. In use, plate 76 is positioned contacting the outer axial surface of respective insulating plate 6, which is engaged, together with respective plate 5, by a tubular inner body 78, and is enclosed, along the outer edge and together with respective plate 5 and plate 76, by an insulating sleeve 79. Frame 75 also comprises a sleeve 80 coaxial with axis 14 and integral with and located between the inner edges of plates 76 and 77; a tubular casing 81 coaxial with axis 14 and fitted contacting the outer edges of sleeves 79 and 80; and a substantially cup-shaped metal bell 82 having its concavity facing the surface 83 of plate 77 opposite that facing plate 76, and having a convex end wall 84 blending with a cylindrical lateral wall 85, the free edge of which is connected integral with a rigid ring 86 coaxial with axis 14 and connected by screws 87 to a ring 88 integral with the outer edge of surface 83.

Portion 8 also comprises a piston 89 sliding axially inside frame 75 against the thrust exerted by an elastic reaction system 90. As shown more clearly in Fig.4, piston 89 comprises a sleeve 91 coaxial with axis 14 and closed, at the end facing the inner surface of bell 82, by a cover 92. Sleeve 91 is fitted in sliding manner through tubular body 78, a central hole 93 in plate 77, and an annular plate 94, which surrounds sleeve 91 and presents a number of axial walls 95 by which plate 94 is rendered integral with the inner surface of a bell 96 integral with one end of sleeve 91, housed inside bell 82 and coaxial with axis 14. The free edge of bell 96 facing plate 77 is connected integral with a first ring 97 of a clamping device 98, which presents a second ring 99 coaxial with ring 97 and axis 14, and grips between rings 97 and 99 the inner edge of an annular membrane 100, the outer edge of which is gripped between rings 86 and 88 defining a second clamping device 101.

Together with membrane 100, bells 82 and 96 define a chamber 102 communicating, via a fitting 103 through bell 82, with a pneumatic circuit (not shown) for supplying pressurized fluid, preferably nitrogen, to both chamber 102 and fitting 54 of circuit 53.

Plate 94 presents two numbers of equally-spaced alternating through holes 104 and 105 engaged by respective pins 106 and 107 parallel to axis 14. More specifically, each pin 106 presents, at one end, a spherical head 108 fitted in axially-fixed manner inside a respective spherical seat formed in respective hole 104; extends in axially-sliding manner through a hole 109 formed in plate 77 and coaxial with respective hole 104; and terminates at the other end in a flared head 110 located between plates 76 and 77. Each pin 107 also presents, at one end, a spherical head 111 fitted in axially-fixed manner inside a respective spherical seat formed in respective hole 105; and extends in axially-sliding manner, via the interposition of a slideway, along a respective sleeve 112 extending through a respective hole 113 formed through plate 77.

Elastic system 90 comprises, for each pin 106, a set of Belleville washers 114 compressed between plates 94 and 77 and coaxial with pin 106; and, for each pin 107, a set of Belleville washers 115 compressed between plates 94 and 77 and coaxial with relative sleeve 112.

At the opposite end to that closed by cover 92, sleeve 91 presents an inner flange 116 cooperating, in use, with module 60 for locking it axially against flange 44 of tubular body 43.

In use, sleeve 91 houses both head 73 of core 47 and a device 117 for engaging a clamping joint 118 connecting piston 89 and head 73. Device 117 comprises a jack 119 fitted inside sleeve 91 and having an output rod 120 coaxial with axis 14 and connected at the free end to the inner surface of cover 92. Jack 119 presents a body 121 fitted integral with a plate 122 moving with body 121 along sleeve 91 and fitted along the edge with rods 123. Rods 123 extend parallel with axis 14 through respective guides 124, and support a wedge-shaped ring 125 moving with plate 122 parallel with axis 14 and inside an annular gap defined internally by head 73, which constitutes an inner pin element of joint 118, and externally by the inner surface of sleeve 91. Said gap also houses a number of counterwedges 126 mutually connected about head 73 by retaining rings 127, so as to define, together with sleeve 91 and ring 125, an outer clamping element of joint 118, and having internal teeth mating with grooves 74.

As shown in Fig.s 3 and 4, in addition to heating element 57 and plates 5, the heat required for curing tire 2 inside toroidal chamber 18 is also supplied by a known annular outer casing 128 extending in contact with the cylindrical outer surface of annular body 17 of mold 3, and comprising a number of annular conduits 129 for circulating heated heat exchange fluid from an external source (not shown).

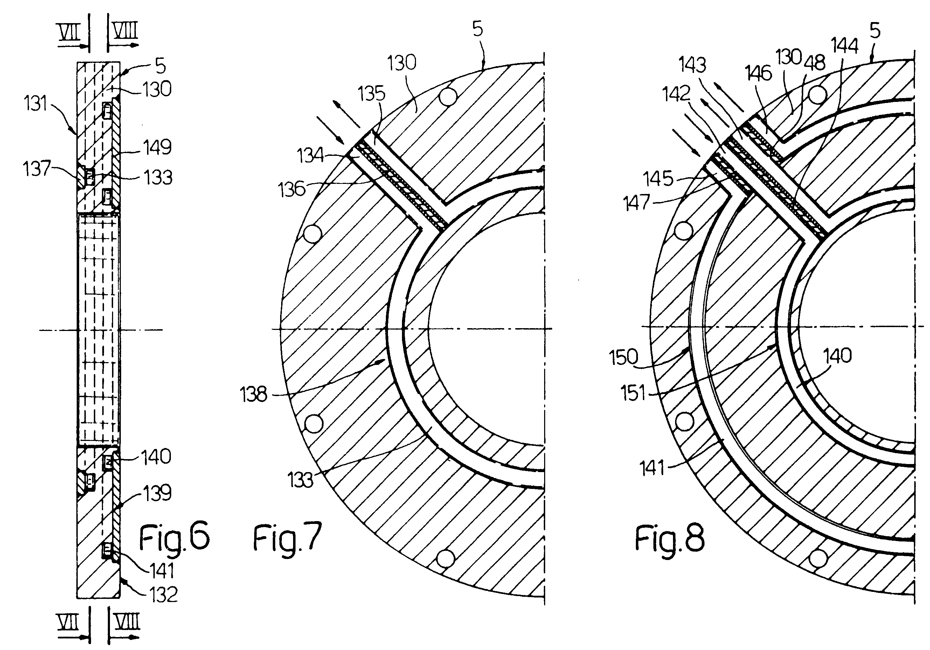

In addition to heating tire 2, plates 5 also provide, during curing, for selective local heating and cooling, for enabling constant control of the internal temperatures of the tire. For this purpose, as shown in Fig.s 6, 7 and 8, each plate 5 comprises an intermediate annular body 130 defined axially by two opposite flat annular surfaces 131 and 132, the first facing mold 3. As shown in Fig. 7, surface 131 presents an annular groove 133 extending along the inner edge of surface 131 and communicating with two radial grooves 134 and 135 separated by a central wall 136, which divides groove 133 into two ends communicating respectively with grooves 134 and 135. Grooves 133, 134 and 135 are closed externally by a cover 137 (Fig.6) defining, with grooves 133, 134 and 135, a portion of a circuit 138 for cooling fluid supplied to plate 5 by an external cooling unit (not shown), for maintaining within acceptable limits the temperature of respective bead portion 11 of tire 2 being cured.

As shown in Fig.6, surface 132 presents a sunken annular portion 139 in which are formed two concentric annular grooves 140 and 141 (Fig.8) extending respectively along the inner and outer edges of annular portion 139. Groove 140 communicates with two radial grooves 142 and 143 separated by a central wall 144, which divides groove 140 into two ends communicating respectively with grooves 142 and 143; while groove 141 is divided by grooves 142 and 143 into two ends communicating respectively with radial grooves 145 and 146 located on either side of and separated from grooves 142 and 143 by respective walls 147 and 148.

Together with grooves 140, 142, 143 and grooves 141, 145, 146, a cover 149 fitted inside annular portion 139 defines portions of respective circuits 150 and 151 for heating fluid supplied to plate 5, at possibly different and differently varying temperatures, by respective external heating units (not shown), for maintaining within acceptable predetermined limits the temperature of the various sidewall portions of tire 2 being cured.

Circuits 138, 150 and 151 may of course differ in number and location from those illustrated herein, providing they are so designed and located as to control the temperature of the various parts of tire 2 and so enable minimum recourse to curing inhibitors and accelerators, which seriously affect manufacturing cost and often also the physical characteristics of tires 2.

According to a variation not shown, circuits 150 and 151 define conduits housing respective electric resistors (not shown) the terminals of which come out through grooves 142, 143, 145 and 146.

In actual use, portions 7 and 8 of curing unit 4 are originally separated (Fig.2) for enabling insertion of mold 3, already fitted with casing 128, between portions 7 and 8 and coaxial with axis 14. Obviously, mold 3 is initially fitted on to core 47, at which point, motor 32 is operated for moving portions 7 and 8 towards each other and into contact with the opposite axial surfaces of mold 3 as shown in Fig.1.

At this point, pressurized fluid, preferably nitrogen, is fed into chamber 102 so as to move piston 89 in relation to frame 75 and compress washers 114 and 115 of elastic system 90. Device 117 is then operated by activating jack 119 so as to press ring 125 between the inner surface of sleeve 91 and the outer surface of counterwedges 126, which are thus pressed into grooves 74 on head 73 so as to engage joint 118 and integrally connect piston 89 and head 73.

Engagement of joint 118 provides for packing mold 3 between plates 5 and 6 and portions 7 and 8 of curing unit 4, to which additional pressure is applied, via elastic system 90, by exhausting chamber 102.

The presence of bladder module 60 fitted in sliding manner on to one of the two portions of curing unit 4 thus provides for a drastic reduction in size changeover time, by virtue of the different sized tire 2 being supplied to unit 4 already fitted inside mold 3, thus enabling a changeover in size by simply sliding a new module 60 on to core 47.

Moreover, by virtue of plates 5 and casing 128, the latter of which may be supplied with either heating or cooling fluid, and the conduits 129 of which may form various separate circuits supplied with heat exchange fluids at different temperatures, the various portions of mold 3, and consequently tire 2, may be heated or cooled selectively for maintaining the various parts of tire 2 at precise temperatures during curing, and so minimizing, as already stated, recourse to curing retarders or accelerators.

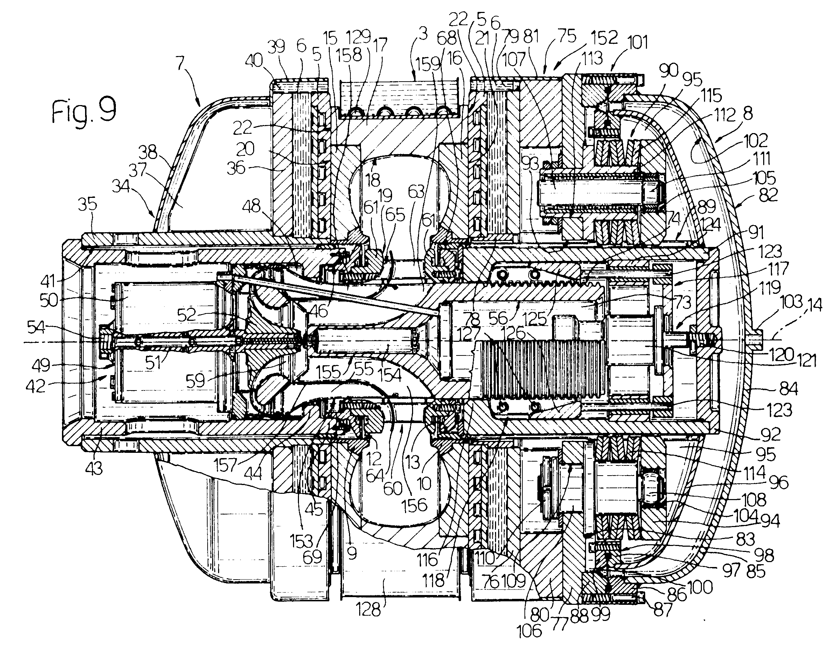

The Fig.9 variation relates to a curing unit 152 substantially identical to unit 4 and the component parts of which, wherever possible, are indicated using the same numbering system.

Unit 152 differs from unit 4 substantially only as regards core 153, which, while presenting the same end portions as core 47, presents a central portion with a small-diameter axial hole housing a known heating element 154 comprising a number of electric resistors (not shown). Outwards of heating element 154, core 153 is defined by a goblet-shaped surface 155 from which extend outwards a number of radial fins 156, each pair of which defines a longitudinal channel divided by a substantially longitudinal wall 157 into an outer conduit 158 for suppling heat exchange fluid to chamber 18, and an inner conduit 159 for feeding heat exchange fluid back from chamber 18 to fan 52.

## Claims

1. A road vehicle tire curing reactor comprising a mold (3) defining internally a toroidal curing chamber (18) for a green tire (2); a number of heat exchange means (5, 42, 128) adjacent to the mold (3); a gas curing unit (4)(152) in turn comprising a first (7) and second (8) portion on either side of the mold (3); and means (23) for moving said two portions (7, 8) towards each other and so gripping the mold (3); characterized by the fact that it also comprises an inner forming module (60) having an annular bladder (62) expandable inside said toroidal chamber (18), and inlets (65) and outlets (66) for pressurized circulation of heat exchange gas inside the bladder (62); one (7) of said two portions (7, 8) of the curing unit (4) presenting a central core (47) extending through the mold (3) and the inner module (60) and connected in sliding manner to the inner module (60); and a releasable joint (118) being provided for axially connecting the core (47) to the other portion (8) of the curing unit (4).

2. A reactor as claimed in Claim 1, characterized by the fact that at least part (5) of said heat exchange means (5, 42, 128) comprises cooling means (138) localized in relation to said mold (3).

3. A reactor as claimed in Claim 1 or 2, characterized by the fact that at least part (5, 128) of said heat exchange means (5, 42, 128) comprises selectively operated local heating means (150, 151, 129).

4. A reactor as claimed in any one of the foregoing Claims, characterized by the fact that said heat exchange means (5, 42, 128) are, at least partially, circulating fluid heat exchange means.

5. A reactor as claimed in any one of the foregoing Claims, characterized by the fact that said heat exchange means (5, 42, 128) comprise two axial plates (5) on either side of the mold (3); each plate (5) presenting at least one heating fluid circuit (150, 151) and at least one cooling fluid circuit (138).

6. A reactor as claimed in any one of the foregoing Claims, characterized by the fact that said heat exchange means (5, 42, 128) comprise a turbine device (42) fitted to said core (47) and extending through the mold (3), for supplying heat exchange fluid inside said bladder (62).

7. A reactor as claimed in any one of the foregoing Claims, characterized by the fact that said releasable joint (118) is a clamping joint (118) comprising an inner pin portion (73) and an outer grip portion (91, 125, 126) fitted respectively to said two portions (7, 8) of the curing unit (4).

8. A reactor as claimed in Claim 7, characterized by the fact that first actuating means (117) are provided on one of said two portions (7, 8) of the curing unit (4), for mutually locking said portions (73; 91, 125, 126) of said joint (118).

9. A reactor as claimed in Claim 7 or 8, characterized by the fact that said two portions (7, 8) of the curing unit (4) comprise respective frames (34, 75) for gripping said mold (3); a first (34) of said frames (34, 75) being integral with the respective said portion (73) of said joint (118); and the portion (8) of the curing unit (4) fitted with a second (75) of said frames (34, 75) comprising a piston (89) integral with the respective said portion (91) of said joint (118), axial reaction means (90) located between the piston (89) and said second frame (75), and second actuating means (102) for moving said piston (89) axially in relation to the second frame (75) and towards the first frame (34) against the thrust exerted by said reaction means (90).

10. A reactor as claimed in Claim 9, characterized by the fact that said second actuating means (102) are pressurized fluid thrust means.

11. A reactor as claimed in Claim 9 or 10, characterized by the fact that said axial reaction means (90) are elastic reaction means.

## Patentansprüche

1. Straßenfahrzeugreifen-Vulkanisiereinrichtung mit einer Form (3), die auf der Innenseite eine torusförmige Vulkanisierkammer (18) für einen grünen Reifen (2) umgrenzt; einer Anzahl von Wärmeaustauschmitteln (5, 42, 128) neben der Form (3); einer Gas-Vulkanisiereinheit (4) (152), die ihrerseits einen ersten (7) und Zweiten (8) Abschnitt auf jeder Seite der Form (3) aufweist; sowie Mitteln (23) zum Bewegen der genannten beiden Abschnitte (7, 8) und so zum Ergreifen der Form (3); dadurch **gekennzeichnet,** daß sie auch ein inneres Formungsmodul (60) aufweist, mit einer ringförmigen Blase (62), die im Inneren der genannten torusförmigen Kammer (18) aufweitbar ist, sowie Einlässen (65) und Auslässen (66) für den Druckumlauf von Wärmeaustauschgas im Inneren der genannten Blase (62); wobei einer (7) der genannten beiden Abschnitte (7, 8) der Vulkanisiereinheit (4) einen Mittelkern (47) aufweist, der sich durch die Form (3) und das innere Modul (60) erstreckt und verschieblich mit dem inneren Modul (60) verbunden ist; und wobei eine lösbare Verbindung (118) zum axialen Verbinden des Kerns (47) mit dem anderen Abschnitt (8) der Vulkanisiereinheit (4) vorgesehen ist.

2. Einrichtung wie beansprucht in Anspruch 1, dadurch **gekennzeichnet,** daß mindestens ein Teil (5) der genannten Wärmeaustauschmittel (5, 42, 128) Kühlmittel (138) aufweist, die in Zuordnung zur genannten Form (3) lokalisiert sind.

3. Einrichtung wie beansprucht in Anspruch 1 oder 2, dadurch **gekennzeichnet,** daß mindestens ein Teil (5, 128) der genannten Wärmeaustauschmittel (5, 42, 128) wahlweise betriebene örtliche Heizeinrichtungen (150, 151, 129) aufweist.

4. Einrichtung wie beansprucht in irgendeinem der vorangehenden Ansprüche, dadurch **gekennzeichnet,** daß die genannten Wärmeaustauschmittel (5, 42, 128) mindestens teilweise Wärmeaustauschmittel mit einem umlaufenden Strömungsmittel sind.

5. Einrichtung wie beansprucht in irgendeinem der vorangehenden Ansprüche, dadurch **gekennzeichnet,** daß die genannten Wärmeaustauschmittel (5, 42, 128) zwei axiale Platten (5) auf jeder Seite der Form (3) aufweisen; wobei jede Platte (5) mindestens einen Heizströmungsmittelumlauf (150, 151) und mindestens einen Kühlströmungsmittelumlauf (138) aufweist.

6. Einrichtung wie beansprucht in irgendeinem der vorangehenden Ansprüche, dadurch **gekennzeichnet,** daß die genannten Warmeaustauschmittel (5, 42, 128) eine Turbinenvorrichtung (42) aufweisen, die passend am genannten Kern (47) angeordnet ist und sich durch die Form (3) hindurcherstreckt, um das Wärmeaustauschströmungsmittel dem Inneren der genannten Blase (62) zuzuführen.

7. Einrichtung wie beansprucht in irgendeinem der vorangehenden Ansprüche, dadurch **gekennzeichnet,** daß die lösbare Verbindung (118) eine Klemmverbindung (118) ist, mit einem inneren Stiftabschnitt (73) und einem äußeren Greifabschnitt (91, 125, 126), die entsprechend an den beiden Abschnitten (7, 8) der Vulkanisiereinheit (4) angebracht sind.

8. Einrichtung wie beansprucht in Anspruch 7, dadurch **gekennzeichnet,** daß die ersten Betätigungsmittel (117) auf einem der beiden genannten Abschnitte (7, 8) der Vulkanisiereinheit (4) vorgesehen sind, um wechselweise die genannten beiden Abschnitte (73; 91, 125, 126) der genannten Verbindung (118) zu verriegeln.

9. Einrichtung wie beansprucht in Anspruch 7 oder 8, dadurch **gekennzeichnet,** daß die genannten beiden Abschnitte (7, 8) der Vulkanisiereinheit (4) jeweilige Rahmen (34, 75) zum Ergreifen der genannten Form (3) aufweisen; wobei ein erster (34) der genannten Rahmen (34, 75) in den jeweiligen genannten Abschnitt (73) der genannten Verbindung (118) integriert ist; und der Abschnitt (8) der Vulkanisiereinheit (4), der mit einem zweiten (75) der genannten Rahmen (34, 75) versehen ist, einen Kolben (89), der in den jeweiligen genannten Abschnitt (91) der genannten Verbindung (118) integriert ist, axiale Reaktionsmittel (90), die zwischen dem Kolben (89) und dem genannten zweiten Rahmen (75) angeordnet sind, sowie zweite Betätigungsmittel (102) aufweist, um den genannten Kolben (89) axial in bezug auf den genannten zweiten Rahmen (75) sowie zum ersten Rahmen (34) hin entgegen dem Schub zu bewegen, der von den genannten Reaktionsmitteln (90) ausgeübt wird.

10. Einrichtung wie beansprucht in Anspruch 9, dadurch **gekennzeichnet,** daß die genannten zweiten Betätigungsmittel (102) Druckströmungsmittel-Schubmittel sind.

11. Einrichtung wie beansprucht in Anspruch 9 oder 10, dadurch **gekennzeichnet,** daß die genannten axialen Reaktionsmittel (90) elastische Reaktionsmittel sind.

## Revendications

1. Appareil à vulcaniser un pneu de véhicule routier comprenant un moule (3) définissant intérieurement une chambre de vulcanisation toroïdale (18) pour un pneu non encore traité (2) ; un certain nombre de moyens d'échange de chaleur (5, 42, 128) voisins du moule (3) ; une unité de vulcanisation en phase gazeuse (4) (152) comprenant à son tour une première (7) et une seconde (8) partie de chaque côté du moule (3) ; et des moyens (23) pour déplacer lesdites deux parties (7, 8) l'une vers l'autre et ainsi serrer le moule (3) ; caractérisé par le fait qu'il comprend également un module de façonnage interne (60) ayant une vessie annulaire (62) dilatable à l'intérieur de ladite chambre toroïdale (18), et des entrées (65) et des sorties (66) pour la circulation sous pression de gaz d'échange de chaleur à l'intérieur de la vessie (62) ; l'une (7) desdites deux parties (7, 8) de l'unité de vulcanisation (4) présentant un noyau central (47) s'étendant à travers le moule (3) et le module interne (60) et étant relié d'une manière coulissante au module interne (60) ; et un joint (118) apte à être libéré étant fourni pour relier axialement le noyau (47) à l'autre partie (8) de l'unité de vulcanisation (4).

2. Appareil tel que revendiqué en revendication 1, caractérisé par le fait qu'au moins une partie (5) desdits moyens d'échange de chaleur (5, 42, 128) comprend des moyens de refroidissement (138) situés en relation avec ledit moule (3).

3. Appareil tel que revendiqué en revendication 1 ou 2, caractérisé par le fait qu'au moins une partie (5, 128) desdits moyens d'échange de chaleur (5, 42, 128) comprend des moyens de chauffage locaux fonctionnant de façon sélective (150, 151, 129).

4. Appareil tel que revendiqué dans l'une quelconque des revendications précédentes, caractérisé par le fait que lesdits moyens d'échange de chaleur (5, 42, 128) sont, au moins partiellement, des moyens d'échange de chaleur à fluide circulant.

5. Appareil tel que revendiqué dans l'une quelconque des revendications précédentes, caractérisé par le fait que lesdits moyens d'échange de chaleur (5, 42, 128) comprennent deux plaques axiales (5) de chaque côté du moule (3) ; chaque plaque (5) présentant au moins un circuit de fluide de chauffage (150, 151) et au moins un circuit de fluide de refroidissement (138).

6. Appareil tel que revendiqué dans l'une quelconque des revendications précédentes, caractérisé par le fait que lesdits moyens d'échange de chaleur (5, 42, 128) comprennent un dispositif de turbine (42) fixé audit noyau (47) et s'étendant à travers le moule (3), pour mener le fluide d'échange de chaleur à l'intérieur de ladite vessie (62).

7. Appareil tel que revendiqué dans l'une quelconque des revendications précédentes, caractérisé par le fait que ledit joint apte à être libéré (118) est un joint de serrage (118) comprenant une partie de broche interne (73) et une partie de mâchoire externe (91, 125, 126) fixées respectivement auxdites deux parties (7, 8) de l'unité de vulcanisation (4).

8. Appareil tel que revendiqué en revendication 7, caractérisé par le fait que des premiers moyens (117) de commande sont prévus sur l'une desdites deux parties (7, 8) de l'unité de vulcanisation (4), pour bloquer mutuellement lesdites parties (73, 91, 125, 126) dudit joint (118).

9. Appareil tel que revendiqué en revendication 7 ou 8, caractérisé par le fait que lesdites deux parties (7, 8) de l'unité de durcissement (4) comprennent des cadres respectifs (34, 75) pour serrer ledit moule (3) ; un premier (34) desdits cadres (34, 75) étant monobloc avec ladite partie respective (73) dudit joint (118) ; et la partie (8) de l'unité de vulcanisation (4) fixée avec un second (75) desdits cadres (34, 75) comprenant un piston (89) monobloc avec ladite partie respective (91) dudit joint (118), des moyens de réaction axiale (90) situés entre le piston (89) et ledit second cadre (75), et des seconds moyens de commande (102) pour déplacer ledit piston (89) axialement par rapport au second cadre (75) et en direction du premier cadre (34) contre la poussée exercée par ledit moyen de réaction (90).

10. Appareil tel que revendiqué en revendication 9, caractérisé par le fait que lesdits seconds moyens de commande (102) sont des moyens de poussée de fluide sous pression.

11. Appareil tel que revendiqué en revendication 9 ou 10, caractérisé par le fait que lesdits moyens de réaction axiale (90) sont des moyens de réaction élastique.
